# EUROPEAN PATENT SPECIFICATION

(11) **EP 2 405 033 B1**
(45) Date of publication and mention of the grant of the patent: **29.05.2013**
(21) Application number: 10168657.4
(22) Date of filing: 07.07.2010
(51) Int. Cl.: C25D 1/08, C25D 1/10, C25D 5/02

(54) **Porous electroformed shell for patterning and manufacturing method thereof**
Poröse elektrogeformte Hülle für Mustererzeugung und ihr Herstellungsverfahren
Coque électroformée poreuse pour son procédé de formation et de fabrication

(43) Date of publication of application: 11.01.2012
(73) Proprietor: Moltex Co., Ltd., Gyeonggi-Do 456-843 (KR)
(72) Inventor: Sung, Kie-Moon, 463-914, Gyeonggi-do (KR); Weon, Man-Jae, 456-763, Gyeonggi-Do (KR); Lee, Kyung-Ho, 142-882, Seoul (KR); Park, Young-Min, 446-772, Gyeonggi-Do (KR)
(74) Representative: Bertsch, Florian Oliver

(56) References cited:
- EP-A2- 2 025 427
- GB-A- 2 243 618
- US-A- 5 632 878
- US-A- 5 728 284
- US-A1- 2003 059 169

## Description

### BACKGROUND OF THE INVENTION

### 1. Field of the invention

The present invention relates to a porous electroformed shell for patterning and a manufacturing method thereof, and more particularly to a porous electroformed shell for patterning and a manufacturing method thereof, allowing to economically and effectively manufacture a surface skin material or plastic molded product with refined texture, which is employed in one-piece molding of a high-quality surface skin material for providing a curved surface of a specific three-dimensional cubic synthetic resin product with refined texture through various patterns of desired shapes and thereby enhancing an emotional quality.

In the manufacturing method of a porous electroformed shell for patterning, according to the present invention, both the overall and local formation positions, densities, and diameters of pores can be simply, economically, efficiently and precisely controlled according to various curved shapes of the electroformed shell by using a masking film. Accordingly, in forming the surface of a high-quality surface skin material (i.e. skin sheet or film) or a plastic molded product with a predetermined pattern, the predetermined pattern can be efficiently formed in such a manner as to have a regular position, a regular directionality, sharp radii, and minimized deformation by using the pores as decompression suction holes or air vents, which may be realized with increased productivity and economical efficiency.

### 2. Description of the Prior Art

With the improvement of the standard of living, and the industrial development, consumers have recently shown a tendency of gradually considering, as an important purchasing criteria, sensitive qualities (such as colors or textures) shown in a product's appearance as well as the product's own functions.

In accordance with such a tendency, a plastic molding technology and an apparatus thereof have recently been advanced day-by-day. Also, as a cost reduction and a high value addition are required in a vehicle manufacturing field and an information technology (IT) field, various in-mold forming methods and a multicomponents coinjection method have been suggested, and their application ranges have been rapidly expanded.

The in-mold forming method indicates a kind of forming method in which within one mold, various technologies, such as labeling, lamination, painting, coating, welding, surface protection, decoration, assembly, transfer printing, laser cutting, plasma processing, spray activation, or micro-structuring, are applied while a product is molded. Also, the in-mold forming method may be divided into in-mold lamination (IML), in-mold decoration (IMD), in-mold coating (IMC), in-mold transcription (IMT), and the like, according to the kinds of applied techniques.

Meanwhile, in the multicomponents coinjection method, a molded article is manufactured by combining different kinds or colors of polymer molding materials with each other and by using one or more molding machines and a specific molding system through a single process. The method representatively includes sandwich molding, over-molding, or the like.

The two highly-functional and highly-efficient injection molding methods as described above are not independent from each other. In actuality, in many cases, the two methods are mutually overlappingly employed.

In manufacturing interior materials for an automobile, one-piece molding of a high-quality surface skin material is applied to various articles, such as an instrument panel or board, a glove box, a console, a lower cover, a pillar, a door's internal panel, an airbag cover panel, or the like. Also, examples of the method may include: an in-mold injection compression forming method, in which a thermoplastic polyolefin (TPO) film (about 0.7mm) and a foamed layer (about 3.0mm) as skin materials of a surface decorative layer for providing grain patterns and soft feeling, and a polypropylene composite as a substrate are used, the preformed TPO skin layer is mounted within a mold by a robot, and foaming and pattern-decorating processes and a molding process are simultaneously carried out as a single process; an in-mold trimming lamination method, in which a skin material after being laser-cut is trimmed within a mold, thereby omitting a post-process trimming process; a post-process-unwanted hybridizing method in which injection molding of thermoplastic resin, and reaction molding of polyurethane are applied to a sheet trim of a premium automobile so as to provide an excellent soft touch effect and a high scratch resistance and a high UV resistance; a carpet surface decoration integral molding method, in which for an interior material of a carpet skin material, a carpet laminate is preformed and compression-molded as a single process, without a preforming process of the carpet skin material, thereby reducing the number of processes; and a multi-stage clamping control injection compression molding method, in which in a case where a skin material is a foam material, the skin material is placed within a mold by opening the mold, and is subjected to low pressure molding, and then the mold is compressed and re-opened to restore the skin material's thickness to be close to its original thickness.

Herein, in in-mold forming employing a skin material having a specific cubic pattern, for example, a natural or artificial leather grain pattern, since the skin material has an influence on an emotional quality, it has become an important issue to provide a predetermined cubic pattern to the skin material, and preform it into a predetermined three-dimensional shape. Examples of such a preforming method may include a positive type (male type) vacuum forming method, a negative type (female type) vacuum forming method, a polyurethane spray method, and a slush molding method.

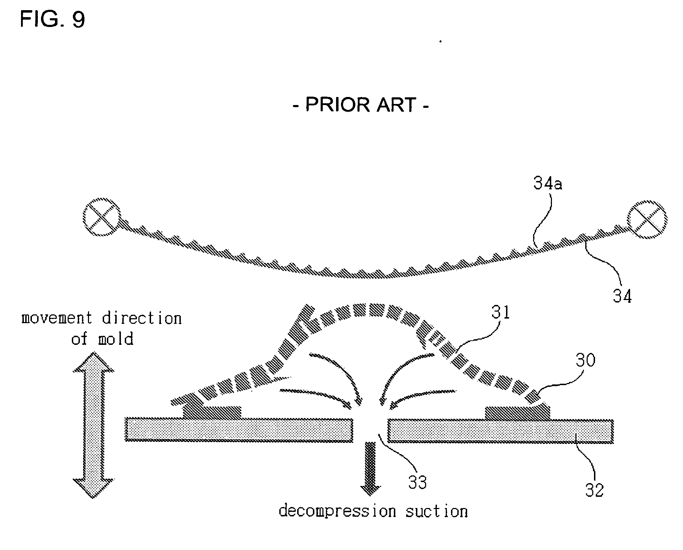

Herein, a general positive (male) vacuum forming method is shown in FIG. 9. FIG. 9 is a mimetic diagram illustrating a conventional general positive type vacuum forming method for preforming a skin material as a decorative layer. In the method, a sheet 34 made of polyvinyl chloride (PVC) or acrylonitrile-butadiene-styrene (ABS) copolymer, which is pre-textured with a predetermined grain pattern 34a and is preheated, is in contact with a porous epoxy mold 30 formed with multiple fine pores 31. Herein, the porous epoxy mold 30 has a specific three-dimensional cubic shape and is supported and fixed by a base 32 formed with a decompression suction hole 33 in the center thereof. Through decompression suction, the sheet 34 formed with the grain pattern is pre-shaped in such a manner that it can correspond to the shape of the porous epoxy mold 30.

This method is advantageous in that productivity and economical efficiency are high. However, since the sheet 34 pre-patterned with the grain pattern 34a, in a softened state through pre-heating, comes in contact with the porous epoxy mold 30 having a complicated three-dimensional shape and is vacuum-sucked, there is a disadvantage in that the entire expression precision of grains (sharpness of a grain outline) is low, some grains locally disappear, and positions and directions of grains are irregularly changed.

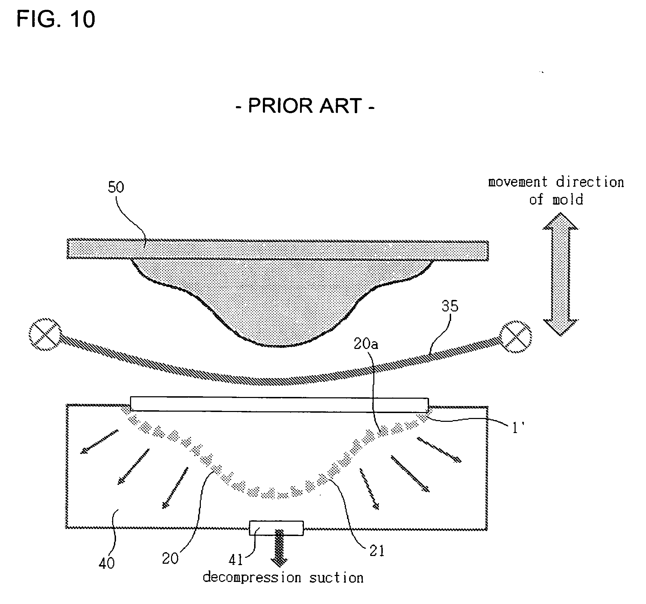

Meanwhile, FIG. 10 is a mimetic diagram illustrating a conventional general negative type vacuum forming method for preforming a skin material as a decorative layer. In the method, a porous electroformed shell 1' which includes an electrodeposited layer 20 having a grain patterned surface 20a and multiple fine pores 21 formed therein is mounted on a lower mold 40 having a decompression suction hole 41 in the center thereof. Then, a smoothened thermoplastic polyolefin (TPO) sheet 35 not formed with a grain pattern is softened through preheating, comes in contact with the porous electroformed shell 1', and is decompression-sucked while pressed by an upper mold 50. As a result, a grain pattern is provided to the sheet and at the same time, the sheet is pre-shaped.

Accordingly, since the above described negative type vacuum forming method generally employs the porous electroformed shell 1', there is an advantage in that the expression precision of grains (sharpness of a grain outline) is high, local disappearance of grains hardly occurs, deformation of grains is minimized, positions and directions of grains are regular, and productivity and economical efficiency are high. Thus, the method has been widely applied to the manufacturing of a skin material having a decorative layer.

Meanwhile, a polyurethane spray method for obtaining a preformed skin material by spraying polyurethane on a grain-patterned surface of a mold, followed by curing, and a slush molding method for obtaining a preformed skin material by heating and rotating a mold embedded with a predetermined amount of thermoplastic polyurethane slush, and coating and curing the melted resin within the front surface (internal surface) of a mold cavity, has an advantage in that the expression precision of grains is high and positions and directions of grains are regular, but has a disadvantage in that the productivity and the economical efficiency are low and the durability of the mold is reduced.

As described above, since in an in-mold forming method employing a skin material with a specific cubic pattern, for example, a grain pattern, the above mentioned negative type vacuum forming method may be applied. Hereinafter, a conventional manufacturing method for the porous electroformed shell 1' to be applied to pre-forming of the skin material, especially, a porous nickel electroformed shell, the porous electroformed shell 1', and a forming method of the skin material, will be described.

Japanese Patent Laid-Open HEI 02-225687 (laid open on 1990.09.07) discloses a method for manufacturing a breathable porous electroformed mold, which includes the steps of: electrostatic planting a short fiber on a silver mirror conductive film of a mandrel surface; forming a first electroformed layer in which the base of the short fiber is buried; layering a second electroformed layer for generating and growing a through hole from the leading end of the short fiber; peeling the first and second electroformed layers from the mandrel; and removing the short fiber. This method requires an additional electrostatic file planting apparatus, two-step electroforming processes controlled according to the length of a short fiber, and a short fiber removing process by combustion and/or solvent dissolution, and thus has a low productivity and a low economical efficiency. Furthermore, since it is difficult to locally control the planting density of a short fiber file (a forming position of a shell hole) in accordance with a three dimensional shape during electroforming, it is also difficult to locally control the hole density of the electroformed shell.

Also, Japanese Patent Laid-Open HEI 7-207485 (laid open on 1995.08.08) discloses a method for manufacturing a breathable electroformed shell mold and its electroformed shell, in which a first electroforming coating material is applied and dried, a second electroforming coating material is sprayed in a dot shape, a styrene (or acrylic) resin spherical body is attached thereto before the coating materials are dried, first electroforming is carried out, a brass net as a deformation inhibiting reinforcement is attached by spot welding, second electroforming is carried out by attaching the position of the exposed resin spherical body with the same kind of spherical body, thereby increasing a electroformed thickness, and the resin spherical bodies are removed by a solvent. This method has a disadvantage in that a low productivity and a low economical efficiency are low due to complicated processes, and pattern formation on an electroformed shell is basically impossible.

Also, Japanese Patent Laid-Open 2000-301554 (open on 2000.10.31) discloses a method for forming TOP powder slush, in which a skin material forming an electroformed mold formed with a wrinkled pattern and through holes is heated, the formed surface is melted by contacting with TPO powder so as to form a melted film, the melted film is suctioned by decompressing the rear side of the film, air is suctioned and removed from the melted film through the through holes, and then the melted film is cooled and cured thereby eliminating the generation of pin holes. As described above, this method of slush molding has an advantage in that the expression precision of grains is high and positions and directions of grains are regular, but has a disadvantage in that the productivity and the economical efficiency are low. Meanwhile, the formation of through holes in an electroformed mold is not mentioned.

Also, Japanese Patent Laid-Open HEI 6-25885 (laid open on 1994.02.01) discloses a porous electroforming mold and a manufacturing method thereof. In the method, a first electroformed layer having multiple first through holes is formed on an electroformed mask having discharge holes, a combustible first mesh member is attached thereto, and a second electroformed layer having second through holes communicating with the first through holes is formed thereon while supplying nitrogen gas to the first through holes by a gas supply apparatus. Then, after this process is carried out at least once, the electroformed mask is detached, and the first mesh member is heated and removed, thereby forming mesh-shaped through holes mutually communicating with the multiple through holes in a transverse direction. This method also has a disadvantage in that the productivity and the economical efficiency are low due to complicated processes, and it is not related to local control on the density of through holes in the electroformed shell.

Also, Japanese Patent Laid-Open HEI 6-33291 (laid open on 1994.02.08) discloses a method for manufacturing a porous forming mold through electroforming of an electroformed forming mold, in which a surfactant for increasing surface tension in an electrolyte is added to prevent bubbles from being easily separated. This method is based on a conventionally known porous mold manufacturing method, in which nickel is deposited from the surface of a conductive portion while an excess electric field is generated in the interface between the conductive portion and an insulating portion, and a large amount of micro hydrogen gas bubbles are generated, and then, the nickel spreads and grows by entraining bubbles, which forms fine through holes having an increasing diameter from inside to the outside by a bubble shape according to the progress of electroforming. This method includes the steps of: spraying a low viscosity insulating paint in a misty form on an inner surface of a silicone negative matrix to thereby attach the paint thereto in the form of multiple fine spots, followed by curing; coating a low viscosity conductive paint on the overall insulating paint, followed by curing; transferring the paints to an epoxy positive matrix as a backing layer, thereby obtaining a forming die in which the conductive paint is wholly coated on the epoxy backing layer, and the insulating coating material in the form of multiple fine spots is formed thereon; and carrying out electroforming in an electrolyte added with a surfactant. Thus, there is much concern about product defect by the falling off of the insulating coating material during releasing. Also, since the insulating coating material is distributed by a spray, etc., it is difficult to control the diameter and the density of fine through holes. Furthermore, there is a significant problem in that it is very difficult to determine and control a local density difference caused by a three dimensional shape.

Also, US Patent No 5,728,284 (1998.03.17) discloses a method for manufacturing a porous electroformed frame, in which an electroformed frame surface layer with no hole is electroformed; a fine straight hole having a narrow and predetermined diameter is formed by laser, electron beam, ion beam, electric discharge, or drilling; and an enlarged-diametric hole from the end of the fine straight hole is extended by electroforming so that the hole diameter cannot be enlarged even by a long-time surface friction. This method has an advantage in that it is theoretically possible to control the diameter of the fine straight hole and the whole/local density, but has a disadvantage in that physical processing of multiple fine straight holes is very complicated, uneconomic, and time consuming, thus is in actuality, not efficient at all.

Also, Japanese Patent Laid-Open HEI 11-181588 (laid open on 1999.07.06.) discloses a method for manufacturing a porous electroformed frame, in which a metallic substrate, an adhesive tape, release paper, an adhesive tape, and a pin forming resin plate are sequentially layered, and then are subjected to laser treatment to form a plurality of annular resin pins; the resin plate is peeled off except for the annular resin pins; the resin pins are peeled off by contacting an adhesive sheet with the resin pins; the adhesive sheet with the resin pins attached thereto is contacted with a three-dimensional model formed with a conductive layer to thereby attach the resin pins to the conductive layer, the adhesive is removed, and then the conductive layer with the resin pins attached thereto is electroformed to form an electroformed frame; and the resin pins are removed by heating and incineration. Through this method, a through hole whose diameter and position precisely controlled can be formed. However, this method is advantageous in that physical pin treatment through laser has to be carried out on respective positions corresponding to many through holes. Thus, it is complicated, uneconomic, and time-consuming, and has a problem in its actual application. Further, there is a concern about detachment of the resin pins during a process of forming the resin pins, releasing remaining portions, transferring the resin pins to the model, and peeling the adhesive tape.

EP 2 025 427 A2 discloses a method of forming a heat exchanger with exchanger shells that are formed by electroforming about a mandrel.

GB 2 243 618 A1 discloses an electroforming mandrel for making metal foil with holes therein. In one example a printer applies to the foil as it leaves the electroformer a pattern of spots or discs for dielectric ink.

### SUMMARY OF THE INVENTION

Accordingly, the present invention has been made to solve the above-mentioned problems occurring in the prior art, and an object of the present invention is to provide a porous electroformed shell for patterning and a manufacturing method thereof, in which diameters, formation positions, and densities of fine pores formed on a three-dimensional electroformed shell, both as a whole or in part, can be precisely controlled according to various curved shapes of the electroformed shell.

In accordance with an aspect of the present invention, there is provided a method for manufacturing a porous electroformed shell for patterning, the method including: a conductive thin film forming step of forming a conductive thin film on a patterned surface of an epoxy mandrel, and causing the patterned surface to be conductive; a masking pattern transferring step of transferring a non-conductive masking pattern on the conductive thin film by using a masking film formed with the non-conductive masking pattern in the form of dots in non-conductrice ink; an electroforming step of forming an electrodeposited layer by electrodepositing an electroforming metal on the conductive thin film while generating and growing a fine pore at a position of the non-conductive masking pattern; and a porous electroformed shell demolding step of demolding the electrodeposited layer having the fine pore from the epoxy mandrel.

The transferring of the masking pattern is carried out by a wet-transfer masking film.

Preferably, the masking pattern from the masking film may be transferred in a form of multiple dots spaced apart from each other, and also, the dots may be spaced apart from each other, and a dot density defined by a number of the dots per unit area may be wholly uniform or locally non-uniform.

Preferably, in the electroforming step, a blocking wall having a height greater than an uppermost height of the epoxy mandrel by 20 - 200mm, preferably by 100∼200mm, and multiple pores formed therein may be placed in a box form at front/rear/left/right sides and an upper side of the epoxy mandrel, and may be immersed in an electroforming tank, so as to prevent bubbles from detaching by a flow velocity of an electroforming liquid.

Preferably, the electroforming step, a current may be in stages increased in a range of 0.5 to 2.5A/dm² or fixed at a predetermined value within the range.

Preferably, molding of the epoxy mandrel by the silicone cast, and electroforming of the porous electroformed shell from the epoxy mandrel may be repeated at least plural times to form at least a plurality of porous electroformed shells having the same pattern and the same shape.

In accordance with another aspect of the present invention, there is provided a porous nickel electroformed shell for patterning, manufactured by the above described method, wherein the porous nickel electroformed shell has multiple fine pores, in which the fine pores have a front-side opening diameter within a range of 0.02 to 0.35mm, and a rear-side opening diameter within a range of 1.20 to 3.50mm, and are formed in such a manner that the fine pores are spaced apart from each other, and a fine pore density defined by a number of the fine pores per unit area is wholly uniform or locally non-uniform.

Preferably, at least 75% of the fine pores, preferably at least 90%, have front-side opening diameters within a range of 0.05 to 0.15mm.

In the manufacturing method of a patterning porous electroformed shell, according to the present invention, a masking film having a masking pattern is used so that both as a whole or in part, diameters, formation positions, and densities of fine pores can be simply, economically, efficiently, and precisely controlled according to various curved shapes of the electroformed shell. Accordingly, in forming the surface of a high-quality surface skin material (that is, skin sheet or film) or a plastic molded product with a predetermined pattern, when the fine pore is used as a decompression suction hole or an air vent, a predetermined pattern can be efficiently and economically obtained in such a manner that it has a regular position, a regular directionality, sharp radii, and minimized deformation.

### BRIEF DESCRIPTION OF THE DRAWINGS

The above and other objects, features and advantages of the present invention will be more apparent from the following detailed description taken in conjunction with the accompanying drawings, in which:
FIGs. 1a to 1j are views illustrating in sequence a method for manufacturing a porous electroformed shell for patterning, according to the present invention;
FIG. 2 is a plan view illustrating an example of a masking film to be used in the manufacturing method according to the present invention;
FIG. 3 is a mimetic diagram illustrating an epoxy plate in a state where the epoxy plate is formed with a grain pattern and has an electroforming conductive thin film formed thereon;
FIGs. 4a to 4b are enlarged photographs showing a front-side opening, and a rear-side opening of a fine pore formed in a patterning porous electroformed shell manufactured according to the present invention, in which the front-side opening and the rear-side opening correspond to a fine pore opening on a grain patterned surface, and another fine pore opening on a rear surface of the grain patterned surface, respectively;
FIG. 5 is a view illustrating a distribution of front-side opening diameters of fine pores formed in a patterning porous electroformed shell manufactured according to the present invention;
FIGs. 6a and 6b are exemplary photographs showing a grain patterned surface and its rear surface of a patterning porous electroformed shell manufactured according to the present invention, respectively;
FIG. 7 is a darkroom photograph showing multiple fine pores, in which a light source is positioned at the back of the grain patterned surface of the porous electroformed shell shown in FIG. 6a, and thus allows the pores to be observed with the naked eye;
FIGs. 8a and 8b are exemplary photographs showing surface textures of a grain patterned in-mold molded product employing the porous electroformed shell shown in FIGs. 6a and 6b, respectively;
FIG. 9 is a mimetic diagram illustrating a conventional general positive type vacuum molding method for preforming a skin material as a decorative layer; and
FIG. 10 is a mimetic diagram illustrating a conventional general negative type vacuum molding method for preforming a skin material as a decorative layer.

### DETAILED DESCRIPTION OF THE EXEMPLARY EMBODIMENTS

In the present specification, the term "pattern" is widely defined by not only a specific surface shape, but also other shapes recalling any repetitive or specific unificative idea. Especially, the term "grain pattern" is defined by any pattern realized on the outer surface of natural or artificial leather.

Also, the term "shell" denotes a skin-type mold having a three dimensional shaped curve and a protrusion, and sometimes its meaning includes a plate-type two dimensional shape.

Also, the term "porous electroformed shell for patterning" is widely defined by not only a mold for preforming a skin material in a negative type vacuum forming method for manufacturing the skin material used for one-piece molding of a high-quality surface skin material (a kind of in-mold forming method), but also a mold or a screen, used for various forming methods, such as blow molding, stamping molding, injection molding, RIM urethane molding, compression molding, injection compression molding, multi-stage clamping control injection compression molding, various in-mold forming methods, in-mold insert injection molding, resin beads foam molding, and preform molding.

Hereinafter, the present invention will be described in detail with reference to the drawings.

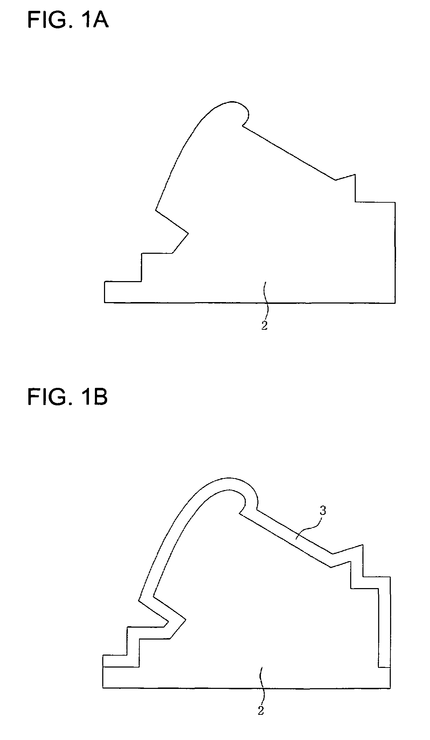

FIGs. 1a to 1j illustrate in sequence a method for manufacturing a porous electroformed shell for patterning, according to the present invention. Hereinafter, this will be described.

First, FIG. 1a shows a step of manufacturing a model, in which all data related to a shape and a size of an injection molded product are obtained from a product developing company or a product manufacturing company, the data are analyzed and reviewed, a tool design of the product is carried out, and a model 2 is obtained based on this.

The model 2 is conventionally made of wood, and as required may be made of synthetic resin (such as epoxy, chemical wood, or the like) or other various materials, such as plaster or beeswax. In general, the outer surface of the model 2 is formed as a smooth surface.

The data on the model 2 are modified in such a manner that a precise pattern can be realized in consideration of the shape and size of the product, and size conversion with about 0.1∼1.0mm can be carried out based on experiences and experimental information. Such data modification takes implementation for easy and precise patterning of a molded product, into consideration.

Also, an appropriate thickness is selected so as to provide durability required for the implementation, the product shape is re-designed, and the obtained data are stored. Since the modified data on the re-designed model 2 is directly related to productivity, various reviews are carried out from the stand point of operating directions and angles for mounting and demolding.

Meanwhile, although not shown, in exceptional cases, the model 2 may be made of light metal, such as Fe, Cu or alloys thereof, Aℓ or alloys thereof, Sn or alloys thereof, Ni or alloys thereof. In these cases, the model 2 may be directly patterned without a leather wrapping step shown in FIG. 1b as described below. Herein, the roughness of a finished surface is preferably equal to or greater than #600 based on sand paper so as to form a sharp and precise pattern.

As described above, in a case where the model 2 is made of a light metal, and its surface is directly patterned, a predetermined required pattern, such as a natural sensitive environment-friendly pattern image, or an artificial creative image, is used to create a predetermined required design through a known photographing technique, and a known computer application program, and then the created design is combined with any object for expressing the pattern. In general, a photomask film for transferring predetermined patterned features on the outer surface of the model 2 is manufactured. This has a significant influence on the quality of the pattern formed on the molded product.

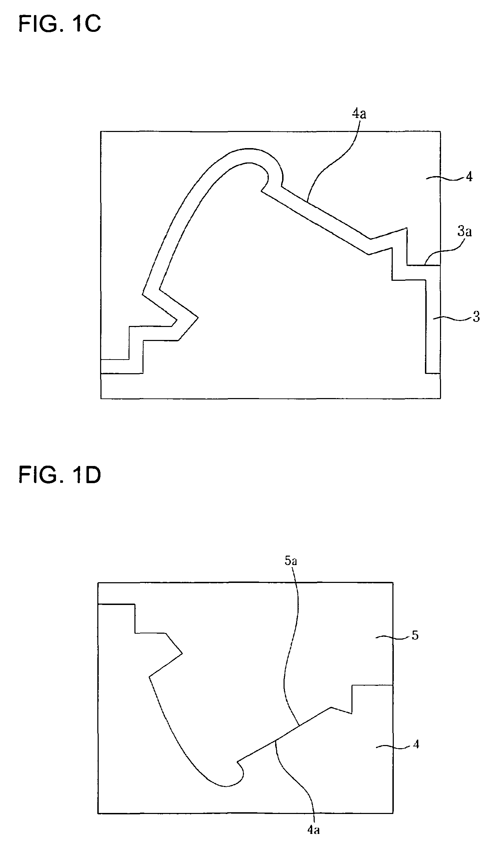

Accordingly, in a case where the model 2 is made of a light metal, after the determination of a pattern and the manufacture of the photomask film, as described above, the surface of the model 2 is formed with a positive type or negative type photoresist coating film, and attached with a prepared photomask film, followed by UV irradiation, developing, and etching. Through the etching with a depth of about 5µm to 500µm, a predetermined pattern with a protrusion and a recess is formed. Such etching may be wet etching or dry etching. Meanwhile, the surface state of the model 2 after the etching has a direct influence on the quality of the pattern, and thus, as required, an additional high gloss surface finishing step or an additional matte surface finishing step may be carried out, in which the method proceeds to a silicone casting step as shown in FIG. 1c without the leather wrapping step as described below as shown in FIG. 1b.

Meanwhile, in a general case where the model 2 is made of wood, synthetic resin, plaster or beeswax, other than a light metal, the leather wrapping step as shown in FIG. Ibis carried out. In this step, the outer surface of the model 2 made of wood, or the like, obtained from the step shown in FIG. 1a, is wrapped with a leather 3 having a to-be-realized pattern, for example, a specific natural or artificial leather grain pattern, and an adhesive state of the leather 3, a pattern direction, a deformation in grains constituting the pattern, a defect of the grains, an extent of the defect, and the like, are checked.

Then, FIG. 1c shows a silicone cast manufacturing step for surface transfer of the wrapped model 2 or the patterned light metal model 2. In this step, a silicone resin is applied to the outer surface formed with the pattern, followed by curing, by which the inner surface of a negative-type silicone cast 4 becomes a patterned surface 4a by a patterned surface 3a of the leather 3 or an etched patterned surface of the light metal model 2.

In general, the silicone resin has a high elasticity, and can be transferred without concern about damage to a formed fine and precise pattern during demolding. The layer of the silicone resin is generally shaped with a predetermined thickness of about 5 to 20mm, and is cured by settling at room temperature for about 24 to 48 hours.

The resin that may be used in the above described step shown in FIG. 1c is not limited to silicone. There is no limitation in the resin as long as it is a soft material having a similar physical property known in the art to that of silicone.

Then, FIG. 1d shows a step of manufacturing an epoxy mandrel 5. In this step, the patterned surface 4a of the negative-type silicone cast 4, on which the surface transfer of the pattern is completed as shown, is applied with an epoxy resin as a reactive curable material, and is cured by settling at room temperature for about 24 to 48 hours, so as to provide a positive-type epoxy mandrel 5 having a patterned surface 5a. Then, this is demolded, and the pattern of the patterned surface 5a is checked. If seams or other small defects exist, retouching on them is carried out, and as required, lettering is carried out.

The use of the epoxy mandrel 5 has an advantage in that it is possible to minimize concern about deformation of the pattern during demolding of a porous electroformed shell as an electrodeposited layer as described below.

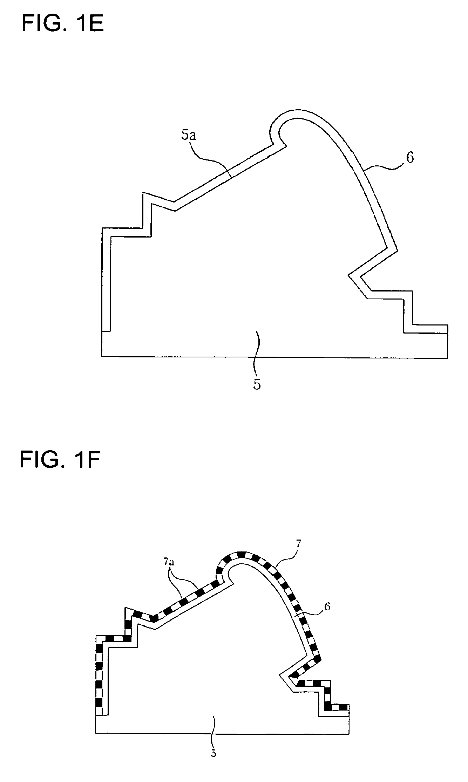

Then, as shown in FIG. 1e, a conductive thin film forming step is proceeded, in which the patterned surface 5a of the epoxy mandrel 5 is uniformly formed with a conductive thin film 6 by a silver mirror reaction, pasty silver lacquer spray, electroless plating, electroplating, or the like in such a manner that a pin hole or layer separation does not occur, and then conducting treatment is performed.

When the conductive thin film 6 is excessively thin, it is impossible to provide sufficient conductivity, and on the other hand, when it is excessively thick, the fidelity or sharpness of a three dimensional fine pattern formed on the patterned surface 5a of the epoxy mandrel 5 is reduced. Thus, the thickness of the conductive thin film 6 is about 1 to 30µm, and is preferably within a range of 2 to 10µmm, but the present invention is not limited thereto. The thickness may be changeable to some extent by various parameters, such as shape or depth of a pattern, width of a grain, physical properties required for an electroformed shell, the utilization of the film, and the like.

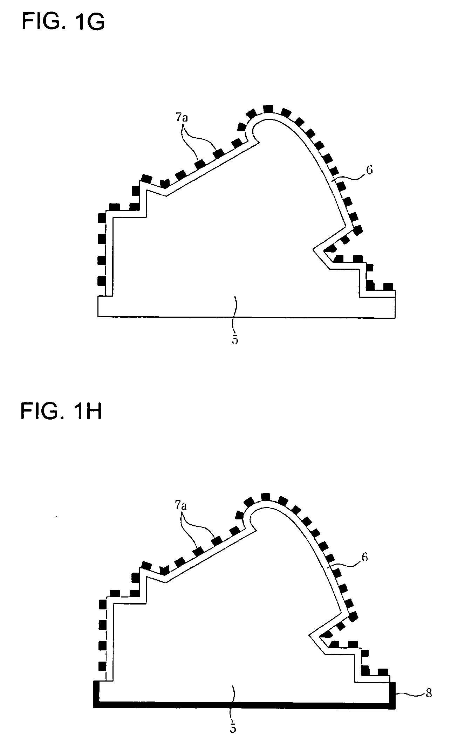

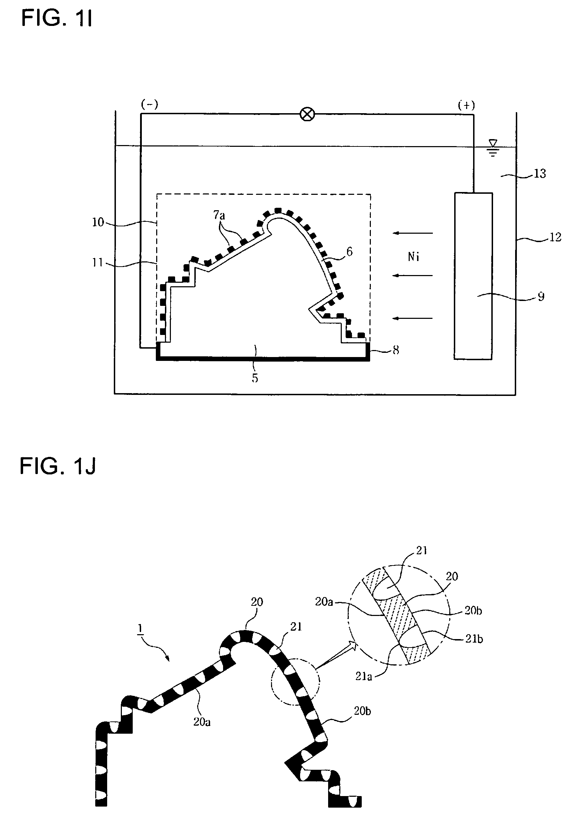

Then, a masking film attaching step shown in FIG. 1 f is carried out, in which on the conductive thin film 6, a masking film 7 is attached.

A masking pattern 7a on the masking film 7 corresponds to a fine-hole forming position on an electroformed shell, as described below, and thus is designed in consideration of various conditions, such as a three dimensional shape property of the epoxy mandrel 5, a pattern property on the patterned surface 5a, a physical property of the electroformed shell, a physical property of a molding resin of constituting an injection molded product or its surface decorative material, a molding temperature, or the like.

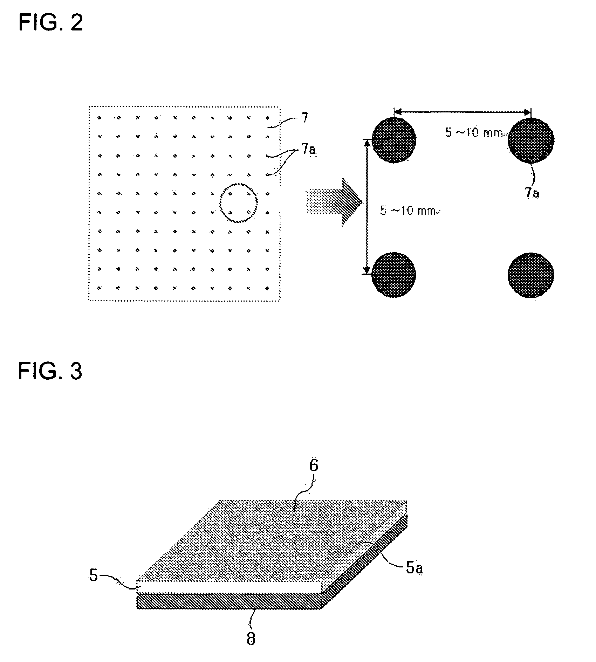

The simplest example of the masking film 7 is shown in FIG. 2. In the shown masking film 7, the masking patterns 7a are in a form of dots in non-conductive ink, in which the dots are equally spaced apart from each other and the number (density) of the dots per unit area is uniformly formed as a whole. The dot pattern 7a has a diameter in a range of 0.2 to 0.45mm, preferably of 0.3 to 0.35mm. Also, the interval between the dot patterns 7a is in a range of 3.5 to 10mm, preferably of 5 to 10mm, but the present invention is not limited thereto.

If the size of the dot pattern 7a is less than about 0.2mm, there is high possibility that it cannot grow into a fine through pore at the position and may be buried in an electroforming metal through electroforming. On the other hand, if the size is greater than about 0.45 mm, an opening diameter of the fine through pore may be excessively enlarged during electroforming, by which an air vent mark may be seen on the outer surface of the molded product with the naked eye through vacuum-forming employing an electroformed shell.

Also, when the interval between the dot patterns 7a is less than about 3.5 mm, there is a high possibility that bubbles may stick to each other by growing during electroforming. Thus, such an interval, in some cases, may be not preferable. On the other hand, the interval is greater than about 10mm, the distribution (density) of fine pores is excessively reduced, which may significantly lower a vacuum molding effect achieved by an electroformed shell. Thus, this interval may also be not preferable.

However, in some exceptional cases, the interval between the dot patterns 7a may be about less than 3.5mm, This allows the bubbles growing through electroforming to stick to each other, thereby providing a dumbbell shaped or a bead shaped fine pore design.

Accordingly, the above described distribution of the patterns 7a is exemplary only. Preferably, in consideration of the outer shape of a three dimensional injection molded product, a pattern density and/or a dot diameter are locally adjusted. For example, in a relatively flat portion, the number of the patterns per unit area may be relatively small, and in a deeply curved portion, the number per unit area may be relatively large.

Also, the dot thickness of the dot patterns 7a is selective, but generally is within a range of about 3 to 50µm, preferably of about 5 to 25µm.

Meanwhile, as the masking film 7 that may be used in the manufacturing method of the present invention, any one of a wet transferring film, and a negative-type or positive-type photomask film may be used. Especially, in a case of a complicated three dimensional shape, the wet transferring film may be preferred from the standpoint of transferring efficiency, but the present invention is not limited thereto.

FIG. 1g shows a transferring step of a non-conductive masking (ink) pattern 7a. Herein, if the masking film 7 is a wet transferring film, the non-conductive masking pattern 7a is transferred by removing a water soluble substrate, such as polyvinyl alcohol (PVA), through water dissolution, and if the masking film 7 is a photomask film, the non-conductive masking pattern 7a is transferred by UV irradiation and development.

Herein, the portion of the conductive thin film 6 is electrodeposited with an electroforming metal during electroforming, and the portion of the non-conductive masking pattern 7a is not electrodeposited with an electroforming metal.

FIG. 1h shows a step of masking a lateral surface and an undersurface, on which a pattern is not formed, so that an electroforming metal is not electrodeposited during electroforming. The reference numeral 8 denotes a masking portion.

Then, FIG. 1i shows an electroforming step. As shown, the conductive thin film 6 of the epoxy mandrel 5, which has been subjected to conducting and non-conducting transfer processes, and has a masked lateral surface and a masked undersurface, is connected to a negative terminal of an electrical device, and a metallic electrode 9 is connected to a positive terminal. They are taken in an electroforming cell 12 containing an electroforming liquid 13, and then electroforming (electrodepositing) plating is carried out by application of DC. Then, metal ions are moved through the electroforming liquid 13, and are electrodeposited on the conductive thin film 6 on the epoxy mandrel 5 having conductivity so as to form a metal electrodeposited layer (that is, the porous electroformed shell 1 for patterning as shown in FIG. 1j).

In general, as the metallic electrode 9 that may be used for electroforming, Ni is most widely used. However, the metallic electrode 9 may be made of copper, brass, or the like. Also, although only one metallic electrode 9 at the right side is shown in the example, it is possible to provide a plurality of metallic electrodes at both left and right sides, or at front, rear, left, and right sides.

Meanwhile, in a case of a nickel electroforming shell, the electroforming liquid 13 may include conventional nickel sulfamate and boric acid as main components, and as required, may further include nickel chloride, or sodium lauryl sulfate as a surfactant.

Nickel electroforming is preferably carried out under relaxed conditions other than general conditions to form fine pores, because such relaxed conditions are advantageous in the control of the growth of bubbles, and the prevention of the detachment of bubbles. Specifically, nickel is precipitated from the surface of the conductive thin film 6 while an excess electric field is generated in an interface with the non-conductive pattern 7a, thereby generating a large amount of fine hydrogen gas bubbles. As the bubbles are entrained, the bubbles become larger and grow to some extent. Then, according to the progress of electroforming, a fine through pore (see reference numeral 21 in FIG. 1j) having a diameter increasing toward the outside is formed by the shape of a bubble.

Accordingly, under the relaxed conditions according to the manufacturing method of the present invention, for example, a step-by-step gradual increase in a current from 0.5 to 2.5A/dm², or under fixed conditions, it is possible to minimize a change in physical properties of a nickel electrodeposited layer, caused by a sudden change in a current, and also to obtain a stable fine through shape.

However, such conditions are not unconditional, but selective. Thus, they are appropriately selected and determined according to a change in various conditions such as three dimensional shape properties and thickness of an electroformed shell, pattern properties, physicochemical properties of a molding resin constituting an injection molded product or its surface skin material, or the like.

Also, according to the manufacturing method of the present invention, a blocking wall 10 having multiple pores 11, made of a non-electrodepositable rigid resin (such as a condensation resin of phenol and formaldehyde, e.g., Bakelite (trade name)), is preferably placed in a box form at the upper part and the front/rear/left/right side parts of the epoxy mandrel 5 to be electrodeposited, so as to prevent bubbles from detaching by the flow velocity of the electroforming liquid. This helps satisfactory generation and growth of the above described fine through pores.

The height of the blocking wall 10 is preferably greater than the uppermost height of the epoxy mandrel 5 by 20 - 200mm. Also, the pore 11 formed in the blocking wall 10 has diameters increasing from the center to the outside in such a manner that a uniform thickness of an electroformed shell can be secured through uniform electrodeposition.

Then, FIG. 1j shows a mimetic cross-sectional view of the porous electroformed shell 1 for forming a negative-type pattern, demolded from the epoxy mandrel 5. From the drawing, it can be seen that the porous electroformed shell 1 for patterning including an electrodeposited layer 20 electrodeposited, in the above described electroforming step, on the conductive thin film 6 of the epoxy mandrel 5, has multiple fine pores 21 formed therein.

The electrodeposited layer 20 has a front surface (that is, an internal surface) 20a as a patterned surface, and a rear surface (that is, an external surface) 20b, and has the fine pores 21 derived from the masking pattern 7a of the above mentioned masking film 7.

The fine pore 21 is formed by an electroforming metal not electrodeposited to a bubble area, as hydrogen bubbles are generated, attached, grown, and developed, on the masking pattern 7a during electroforming. Thus, it takes a cup shape having a front-side opening 21a with a very small diameter, and a rear-side opening 21 b with a relatively very large diameter.

Such a shape is important, because it allows air venting or suction to effectively occur during preforming of a molded product or a decorative skin material, and also prevents foreign substances, such as a molding resin, a dust, or the like, from blocking the fine pore 21.

The front-side opening 21a of the fine pore 21 has a diameter within a range of 0.02∼0.35mm, preferably of 0.05∼4.15mm, but the present invention is not limited thereto, while the rear-side opening 21b has a diameter within a range of 1.20∼3.50mm, preferably of 1.50∼3.20mm, but the present invention is not limited thereto.

The fine pores 21 are spaced apart from each other, and may be formed in such a manner that the density of the fine pores 21 (that is, the number of the fine pores per unit area) can be wholly uniform or locally non-uniform. Also, the diameter of the fine pores 21 may be locally different according to the morphological features of the electroformed shell 1 for patterning.

Meanwhile, the thickness of the electrodeposited layer 20 constituting the electroformed shell 1 for patterning is generally within a range of 0.15 mm to 15mm, but may be appropriately determined within a larger range according to various parameters, such as three dimensional shape and pattern properties, physical properties required for the utilization of an electroformed shell, physicochemical properties of a molding resin constituting an injection molded product or its surface skin material, a molding temperature, or the like.

In amplification, although not shown, the masking pattern 7a and the conductive thin film 6 exist in a front surface (internal surface) of the porous electroformed shell 1 demolded from the epoxy mandrel 5. Thus, for example, the conductive thin film 6, such as a silver mirror film, is removed by using a mixed liquid of hydrogen peroxide and ammonia, and the masking pattern 7a is subjected to combustion removal or solvent removal. Then, gloss control is carried out. As required, cleaning on a rear surface (external surface) of the porous electroformed shell 1, cutting of a residue portion, grinding, gloss treatment, sand blast, and the like may be appropriately carried out.

When the porous electroformed shell 1 for patterning is made of nickel, its characteristics are in actuality the same as the physical properties of pure nickel, and are specifically described below:
thickness: equal to or less than 5mm (selective), density: 8.908g/cm³, melting point: 1455°C, thermal expansion coefficient (25°C): 13.4µm/(m·K), and thermal conductivity (300K): 90.9W(m·K).

In the manufacturing method according to the present invention, as described above, when the non-conductive pattern 7a to be generated and grown as the fine pore 21 is formed on the conductive thin film 6, the masking film 7 having the pre-controlled pattern 7a is used. Thus, it is possible to simply, economically, and efficiently carry out precise control, both as a whole or in part, on the diameter, formation position, and density of the fine pores 21 to be formed in the three dimensional-shaped porous electroformed shell 1 according to various curved shapes of the porous electroformed shell 1, and also, the diameter, formation position, and density of the fine pores can show high reliability and constancy without a difference in the proficiency of an operator and other variables. In other words, through the porous electroformed shell 1 obtained by the manufacturing method of the present invention, it is possible to effectively provide a highly-refined, sharp, and precise texture to the external surface of a surface skin material or a plastic molded product, to be applied to one-piece molding of a high-quality surface skin material.

Also, in the above described method for manufacturing the porous electroformed shell 1 for patterning, as shown in FIGs. 1a to 1j, if a plurality of exactly the same porous electroformed shells 1 are required for mass production, a unit process of 'silicone cast-epoxy mandrel-electroforming-porous electroformed shell' may be repeated so as to obtain multiple duplicates. From such a plurality of duplicate porous electroformed shells, a required injection molded product or a decorative surface skin material can be mass-produced.

Since the masking film 7 illustrated in FIG. 2 has been already described, its additional description will be omitted. Meanwhile, FIG. 3 is a mimetic diagram of the epoxy plate 5 in a state where the epoxy plate 5 has the patterned surface 5a with a grain pattern, and the electroforming conductive thin film 6 formed thereon.

In FIG. 3, the thickness of the conductive thin film 6 is within a range of about 1 to 30µm so that the fidelity or sharpness of the three dimensional fine pattern formed on the patterned surface 5a on the epoxy plate 5 cannot be lowered as described above. Also, the undersurface and the lower portion of the lateral surface, on which the electrodeposited layer is not formed, are formed with the masking portion 8.

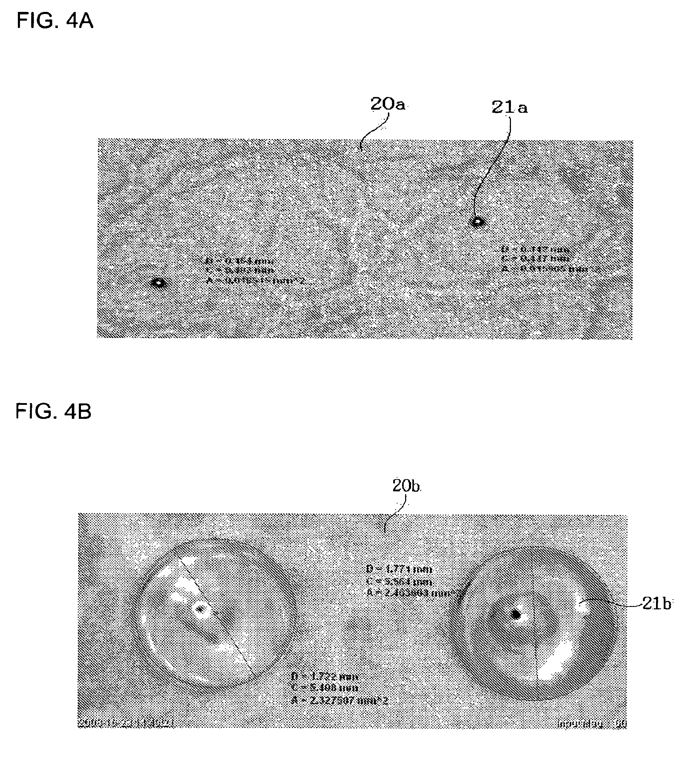

FIGs. 4a and 4b are x60 enlarged photographs showing the front-side opening (see reference numeral 21 a in FIG. 1j), and the rear-side opening (see reference numeral 21b in FIG. 1j) of the fine pores (see reference numeral 21 in FIG. 1j), respectively, in which the fine pores are formed on the grain patterned surface 20 of the porous (nickel) electroformed shell for patterning, obtained by the manufacturing method of the present invention.

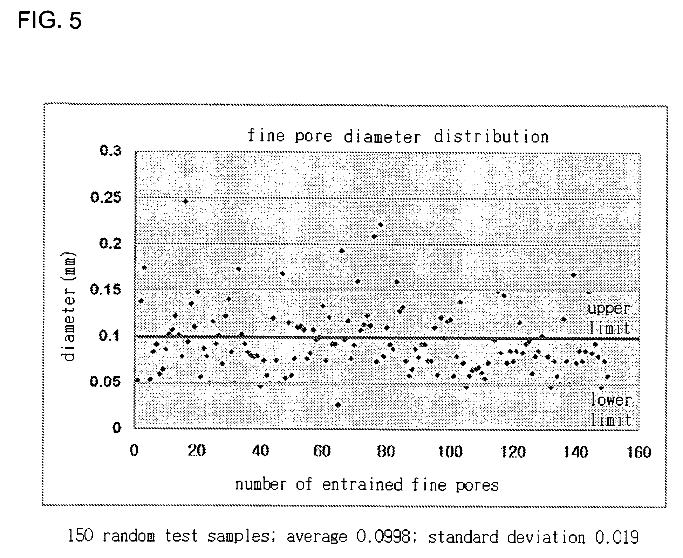

FIG. 5 shows a surface diameter distribution of the front-side opening (see reference numeral 21a in FIGs. 1j and 5a) of the fine pores, in which from among 160 fine pores, about 149 fine pores have a front-side opening's diameter within a target range from 0.15 mm to 0.05 mm. It can be seen that it is possible to set 93% or more of fine pores within a required range.

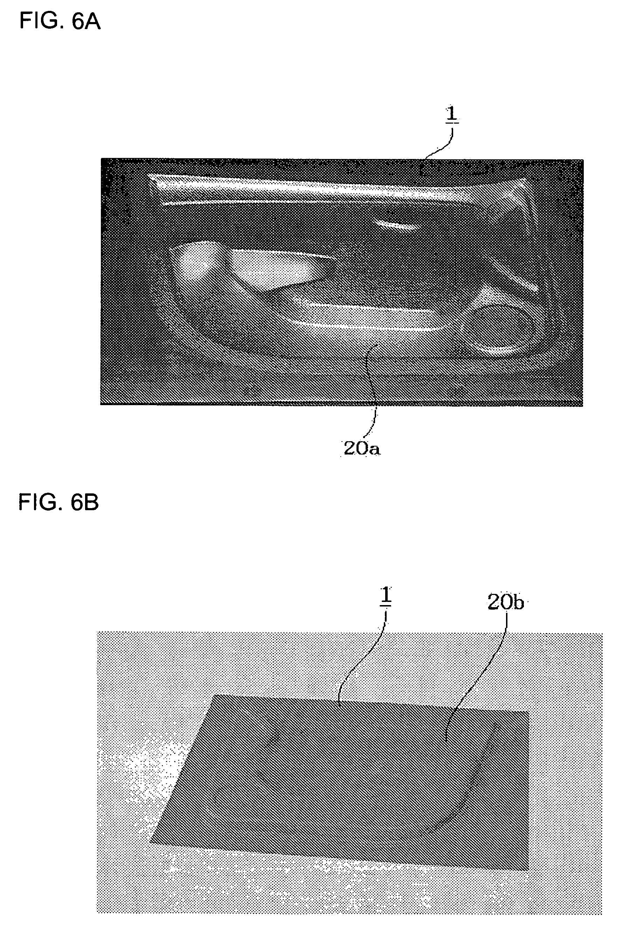

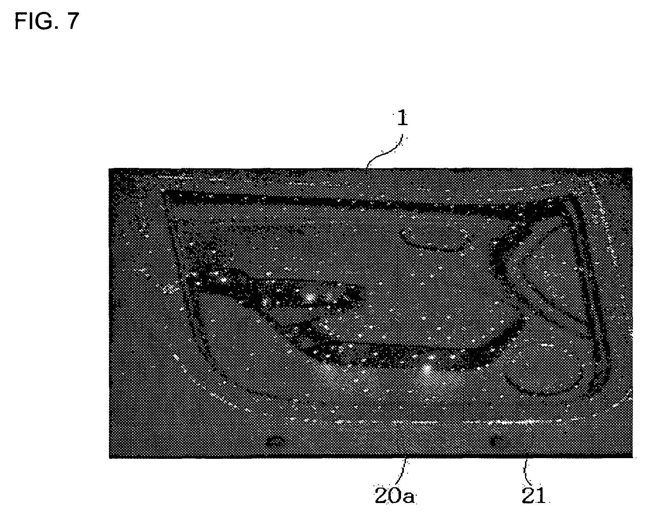

FIGs. 6a and 6b are perspective photographs showing the grain patterned surface 20a and its rear surface 20b of the porous (nickel) electroformed shell 1 for patterning in an automobile interior material, manufactured according to the present invention, respectively. Also, from FIG. 7a, it can be clearly seen that the grain pattern is similar to leather.

FIG. 7 is a darkroom photograph showing multiple fine pores, in which a light source is positioned at the back of the grain patterned surface 20a of the porous (nickel) electroformed shell 1 for patterning shown in FIG. 6a, and the pores are observed from the undersurface side with the naked eye. From FIG. 7, it is possible to directly see the multiple fine pores 21.

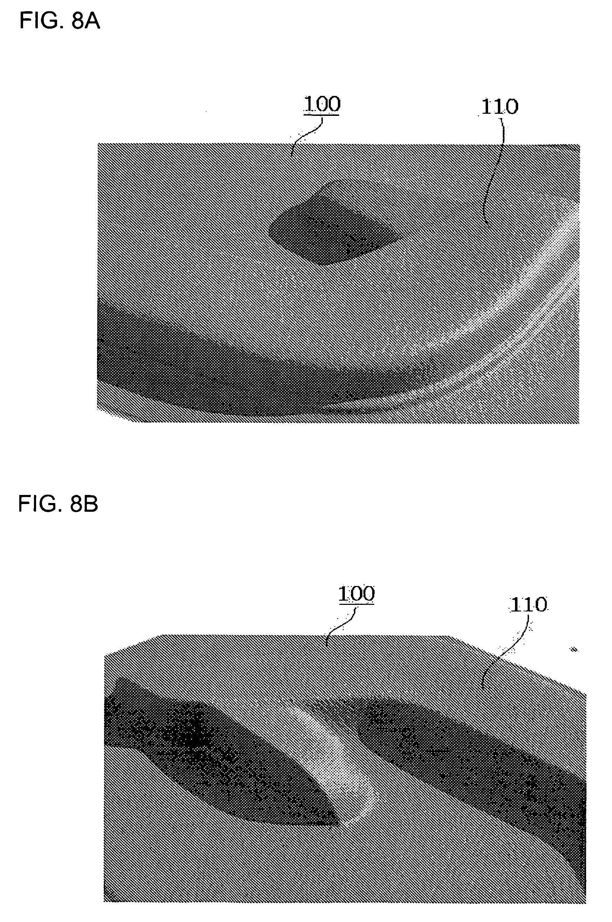

Then, FIGs. 8a and 8b are exemplary photographs showing surface textures realized on the surface decorative grain patterned in-mold plastic molded products shown in FIGs. 6a and 6b, respectively, the textures being obtained by the porous (nickel) electroformed shell 1 for patterning.

Hereinafter, the present invention will be described in more detail with reference to Examples. However, the Examples are illustrative only, and are not intended to limit the present invention.

Examples 1 to 4: Manufacture of a porous nickel electroformed test piece

In order to manufacture a molded product having a grain patterned surface, 12 epoxy plate-type test pieces having the grain pattern as shown in FIG. 4 were prepared. Each test piece was manufactured with a size of 100mm x 100mm x 25mm (thickness), and a porous nickel electroformed shell for patterning was manufactured in accordance with the process as illustrated in FIG. 5 as described below.

The grain patterned surface on the epoxy plate-type test piece became conductive through a silver mirror reaction.

On the surface of the silver mirror, the masking film (sheet) shown in FIG. 2 was attached and transferred with different dot sizes as noted in Table 1. After the transfer of a dot pattern, a box-shaped Bakelite blocking wall having multiple pores formed therein (see reference numeral 10 in FIG. 1i) was provided at the upper side and the front/rear/left/right sides with a height of 25mm upwardly from the upper surface of the test piece in order to reduce flow velocity on the electroformed surface.

Then, in an electroforming cell, nickel electroforming was carried out.

In the electroforming, a current was 0.6 A/dm² at the initial stage, and then increased to 1.5 A/dm².

The electroforming liquid contains nickel sulfamate acid of 400∼450 g/ ℓ, and boric acid of 20∼35 g/ℓ, and has pH 3.5∼4.5.

**Table 1**

| | dot diameter of wet transfer masking film (mm) | temperature | dot thickness |
|---|---|---|---|
| Example 1 | Φ0.25 | 30∼32°C | 9∼12 µm |
| Example 2 | Φ0.35 | | |
| Example 3 | Φ0.45 | | |
| Example 4 | Φ0.55 | | |

Examples 5 to 9: Manufacture of a porous nickel electroformed test piece

Electroforming was carried out while a current was 0.6 A/dm² at the initial stage, and then increased to 1A/dm², and then to 1.5 A/dm².

Meanwhile, on the surface of the silver mirror of the epoxy plate, the wet transfer-type masking film was transferred with different dot sizes as noted in Table 2.

The plating solution has the same conditions as those of Examples 1 to 4, except that sulfamic acid is included in an amount of 450∼500g/ℓ.

**Table 2**

| | dot diameter of wet transfer masking film (mm) | temperature | dot thickness |
|---|---|---|---|
| Example 5 | Φ0.3 | 30∼32°C | 9∼12µm |
| Example 6 | Φ0.35 | | |
| Example 7 | Φ0.4 | | |
| Example 8 | Φ0.5 | | |
| Example 9 | Φ0.55 | | |

### Example 10: Manufacture of a porous nickel electroformed test piece

Electroforming was carried out with a fixed current of 1.5 A/dm², and a wet transfer masking film's dot thickness of 12 to 15µm. Other conditions were the same as those noted Table 2.

**Table 3**

| | dot diameter of wet transfer masking film (mm) | temperature | dot thickness |
|---|---|---|---|
| Example 10 | Φ0.45 | 30∼32°C | 12∼17 µm |

Examples 11 and 12: Manufacture of a porous nickel electroformed test piece Electroforming was carried out with a fixed current of 2 A/dm². Other conditions were the same as those noted Table 2.

**Table 4**

| | dot diameter of wet transfer masking film (mm) | temperature | dot thickness |
|---|---|---|---|
| Example 11 | Φ0.35 | 30∼32 °C | 12∼17 µm |
| Example 12 | Φ0.35 | 40∼42 °C | |

### Test Examples 1 and 2: Test on a front-side opening diameter and a rear-side opening diameter of a fine pore in a test piece

For a fine pore formed in each of the porous nickel electroformed test pieces obtained from Examples 1 to 12, the front-side (grain patterned) opening diameter and the rear-side opening diameter were measured, respectively. The results are noted in Tables 5 and 6.

Also, the formation ratio of fine pores was calculated, and is noted in Table 6.

**Table 5**

| Example | dot diameter of masking film (mm) | dot thickness | temperature | front-side opening diameter |
|---|---|---|---|---|
| Example 1 | Φ0.25 | 9∼12 µm | 30∼32 °C | 0.02∼0.17 |
| Example 2 | Φ0.35 | | | 0.06∼0.17 |
| Example 3 | Φ0.45 | | | 0.11∼0.23 |
| Example 4 | Φ0.55 | | | 0.11∼0.33 |
| Example 5 | Φ0.3 | | | 0.06∼0.12 |
| Example 6 | Φ0.35 | | | 0.08∼0.22 |
| Example 7 | Φ0.4 | | | 0.09∼0.16 |
| Example 8 | Φ0.5 | | | 0.06∼0.23 |
| Example 9 | Φ0.55 | | | 0.11∼0.31 |
| Example 10 | Φ0.45 | 12∼17 µm | | 0.16∼0.26 |
| Example 11 | Φ0.35 | | | 0.07∼0.20 |
| Example 12 | Φ0.35 | | 40∼42 °C | 0.15∼0.24 |

**Table 6**

| Example | dot diameter of masking film (mm) | formation ratio of fine pores | rear-side opening diameter (mm) |
|---|---|---|---|
| Example 5 | Φ0.3 | 23% | 1.53∼1.72 |
| Example 6 | Φ0.35 | 38% | 1.61∼1.78 |
| Example 7 | Φ0.4 | 36% | 1.44∼2.08 |
| Example 8 | Φ0.5 | 72% | 1.56∼1.92 |
| Example 9 | Φ0.55 | 90% | 1.59∼1.78 |
| Example 10 | Φ0.45 | 58% | 2.40∼2.50 |
| Example 11 | Φ0.35 | 78% | 1.91∼3.11 |
| Example 12 | Φ0.35 | 80% | 1.78∼2.07 |

As noted in Table 5, as a result of the test on the front-side opening diameter of fine pores in the porous nickel electroformed test pieces obtained from Examples 1 to 12, it can be seen that when the dot diameter of the masking film is within a range of 0.3 to 0.35mm, the most preferable opening diameter was be obtained.

Meanwhile, it was determined that the test pieces obtained from Examples 1 to 4 have low fine pore formation ratios in which dots transferred from the masking film are not grown and developed into fine pores. Also, it can be seen from Table 6 that the test pieces obtained from Examples 11 and 12 can achieve the most preferable effects in the fine pore diameter and the fine pore formation ratios.

Accordingly, according to the manufacturing method of the present invention, it is possible to simply and easily achieve the precise control on the diameter and the distribution of fine pores.

## Claims

1. A method for manufacturing a porous electroformed shell for patterning, the method comprising:
a conductive thin film forming step of forming a conductive thin film on a patterned surface of an epoxy mandrel, and causing the patterned surface to be conductive;
a masking pattern transferring step of transferring a non-conductive masking pattern on the conductive thin film by using a wet transfer masking film formed with the non-conductive masking pattern in the form of dots in non-conductive ink;
an electroforming step of forming an electrodeposited layer by electrodepositing an electroforming metal on the conductive thin film while generating and growing a fine pore at a position of the non-conductive masking pattern; and
a porous electroformed shell demolding step of demolding the electrodeposited layer having the fine pore from the epoxy mandrel.

2. The method as claimed in claim 1, wherein the masking pattern from the masking film is transferred in a form of multiple dots spaced apart from each other.

3. The method as claimed in claim 2, wherein the masking pattern is transferred in such a manner that the dots are spaced apart from each other, and a dot density defined by a number of the dots per unit area is wholly uniform or locally non-uniform.

4. The method as claimed in claim 3, wherein a diameter of the dots is within a range of 0.2 to 0.45mm and an interval between the dots is within a range of 3.5 to 10mm

5. The method as claimed in claim 3 or 4, wherein a thickness of the dots is within a range of 5 to 25µm.

6. The method as claimed in any of the preceding claims, wherein the patterned surface of the epoxy mandrel is formed as a grain pattern for leather.

7. The method as claimed in any of the preceding claims, wherein the conductive thin film is formed by a silver mirror reaction, pasty silver lacquer spray, electroless plating, or electroplating.

8. The method as claimed in any of the preceding claims, wherein the electrodeposited layer is made of nickel or copper.

9. The method as claimed in any of the preceding claims, wherein in the electroforming step, a blocking wall having a height greater than an uppermost height of the epoxy mandrel by 20 - 200mm and multiple pores formed therein is placed in a box form at front/rear/left/right sides and an upper side of the epoxy mandrel, so as to prevent bubbles from detaching by a flow velocity of an electroforming liquid.

10. The method as claimed in any of the preceding claims, wherein in the electroforming step, a current is in stages increased in a range of 0.5 to 2.5A/dm² or fixed at a predetermined value within the range.

11. The method as claimed in any of the preceding claims, wherein after the porous electroformed shell demolding step, a conductive thin film and masking pattern removing step is further carried out.

12. The method as claimed in any of the preceding claims, wherein the epoxy mandrel is molded from a silicone cast.

13. The method as claimed in claim 12, wherein the silicone cast is molded from a leather wrapping model or a pattern forming light metal model.

14. The method as claimed in any of the preceding claims, wherein after the porous electroformed shell demolding step, cleaning on an external surface (a rear surface) of the porous electroformed shell, cutting of a residue portion, grinding, gloss or matte treatment, or sand blast is carried out.

15. The method as claimed in any of claims 12 to 14, wherein molding of the epoxy mandrel by the silicone cast, and electroforming of the porous electroformed shell from the epoxy mandrel are repeated at least plural times to form at least a plurality of porous electroformed shells having the same pattern and the same shape.

16. A porous nickel electroformed shell for patterning, manufactured by the method as claimed in any of claims 1 to 15, wherein the porous nickel electroformed shell has multiple fine pores, in which the fine pores have a front-side opening diameter within a range of 0.02 to 0.35mm and a rear-side opening diameter within a range of 1.20 to 3.50mm and are formed in such a manner that the fine pores are spaced apart from each other, and a fine pore density defined by a number of the fine pores per unit area is wholly uniform or locally non-uniform.

17. The porous nickel electroformed shell as claimed in claim 16, wherein at least 75% of the fine pores have front-side opening diameters within a range of 0.05 to 0.15mm

## Patentansprüche

1. Verfahren zur Herstellung einer porösen, elektrogeformten Hülle für eine Mustererzeugung, wobei das Verfahren umfasst:
einen Schritt des Ausformens eines leitfähigen dünnen Films zur Ausformung eines leitfähigen dünnen Film auf einer gemusterten Fläche eines Epoxid-Formkerns, und des Bewirkens der Leitfähigkeit der gemusterten Fläche;
einen Schritt des Transferierens eines Maskenmusters zum Transferieren eines nicht leitfähigen Maskenmusters auf den leitfähigen dünnen Film durch Verwendung eines nassen Maskentransferfilms, der mit dem nicht leitfähigen Maskenmuster in Form von Punkten in nicht leitfähiger Tinte ausgeformt ist;
einen Schritt des Elektroformens zum Ausformen einer galvanischen Schicht durch Galvanisieren eines Elektroformmetalls auf dem leitfähigen dünnen Film, bei gleichzeitigem Generieren und Aufbauen einer feinen Pore an einer Position des nicht leitfähigen Maskenmusters; und
einen Schritt des Entformens der porösen, elektrogeformten Hülle zum Entformen der galvanischen Schicht, die die feine Pore des Epoxid-Formkerns aufweist.

2. Verfahren nach Anspruch 1, wobei das Maskenmuster von dem Maskenfilm in Form einer Vielzahl von voneinander beabstandeten Punkten transferiert ist.

3. Verfahren nach Anspruch 2, wobei das Maskenmuster derart transferiert ist, dass die Punkte voneinander beabstandet sind, und wobei eine durch eine Anzahl der Punkte pro Einheitsfläche definierte Punktdichte vollständig einheitlich oder lokal uneinheitlich ist.

4. Verfahren nach Anspruch 3, wobei sich ein Durchmesser der Punkte innerhalb eines Bereichs von 0,2 bis 0,45 mm und ein Abstand zwischen den Punkten innerhalb eines Bereichs von 3,5 bis 10 mm befinden.

5. Verfahren nach Anspruch 3 oder 4, wobei sich eine Dicke der Punkte innerhalb eines Bereichs von 5 bis 25 µm befindet.

6. Verfahren nach einem der vorhergehenden Ansprüche, wobei die gemusterte Fläche des Epoxid-Formkerns als Narbenbild für Leder ausgeformt ist.

7. Verfahren nach einem der vorhergehenden Ansprüche, wobei der leitfähige dünne Film durch eine Silberspiegelreaktion, ein zähflüssiges Silberlackspray, stromloses Beschichten oder Galvanisieren ausgeformt ist.

8. Verfahren nach einem der vorhergehenden Ansprüche, wobei die galvanische Schicht aus Nickel oder Kupfer besteht.

9. Verfahren nach einem der vorhergehenden Ansprüche, wobei in dem Schritt des Elektroformens eine Sperrwand mit einer um 20-200 mm größeren Höhe als die oberste Höhe des Epoxid-Formkerns und mit einer Vielzahl an darin ausgeformten Poren in einer Kastenform an vorderen/hinteren/linken/rechten Seiten und einer oberen Seite des Epoxid-Formkerns platziert ist, um ein Lösen von Blasen durch eine Fließgeschwindigkeit einer Elektroform-Flüssigkeit zu verhindern.

10. Verfahren nach einem der vorhergehenden Ansprüche, wobei in dem Schritt des Elektroformens ein Strom in Stufen innerhalb eines Bereichs von 0,5 bis 2,5 A/dm² erhöht wird oder bei einem vorbestimmten Wert innerhalb des Bereichs festgelegt ist.

11. Verfahren nach einem der vorhergehenden Ansprüche, wobei nach dem Schritt des Entformens der porösen, elektrogeformten Hülle weiterhin ein Schritt des Entfernens des leitfähigen dünnen Films und des Maskenmusters durchgeführt wird.

12. Verfahren nach einem der vorhergehenden Ansprüche, wobei der Epoxid-Formkern aus einem Silikongussteil geformt wird.

13. Verfahren nach Anspruch 12, wobei das Silikongussteil aus einem mit Leder umwickelten Modell oder einem Leichtmetallmodell zur Mustererzeugung geformt wird.

14. Verfahren nach einem der vorhergehenden Ansprüche, wobei nach dem Schritt des Entformens der porösen, elektrogeformten Hülle eine Reinigung an einer externen Fläche (einer hinteren Fläche) der porösen, elektrogeformten Hülle, ein Abtragen eines Rückstandsbereichs, Schleifen, eine Polier- oder Mattierbehandlung oder Sandstrahlen durchgeführt wird.

15. Verfahren nach einem der Ansprüche 12 bis 14, wobei das Ausformen des Epoxid-Formkerns mithilfe des Silikongussteils und das Elektroformen der porösen, elektrogeformten Hülle aus dem Epoxid-Formkern mindestens mehrere Male wiederholt werden, um mindestens eine Vielzahl an porösen, elektrogeformten Hüllen mit demselben Muster und derselben Form auszuformen.

16. Poröse, elektrogeformte Nickelhülle zur Mustererzeugung, hergestellt nach dem Verfahren nach einem der Ansprüche 1 bis 15, wobei die poröse, elektrogeformte Nickelhülle eine Vielzahl an feinen Poren aufweist, wobei die feinen Poren einen Öffnungsdurchmesser an der Vorderseite innerhalb eines Bereichs von 0,02 bis 0,35 mm sowie einen Öffnungsdurchmesser an der Rückseite innerhalb eines Bereichs von 1,20 bis 3,50 mm aufweisen und derart ausgeformt sind, dass die feinen Poren voneinander beabstandet sind, und wobei eine durch eine Anzahl an feinen Poren pro Einheitsfläche definierte Dichte an feinen Poren vollständig einheitlich oder lokal uneinheitlich ist.

17. Poröse, elektrogeformte Nickelhülle nach Anspruch 16, wobei mindestens 75 % der feinen Poren Öffnungsdurchmesser an der Vorderseite innerhalb eines Bereichs von 0,05 bis 0,15 mm aufweisen.

## Revendications

1. Procédé de fabrication d'une coque électroformée poreuse pour la formation de motifs, le procédé comprenant :
une étape de formation de film fin conducteur consistant à former un film fin conducteur sur une surface à motif d'un mandrin époxy, et à rendre la surface à motif conductrice ;
une étape de transfert de motif de masquage consistant à transférer un motif de masquage non conducteur sur le film fin conducteur en utilisant un film de masquage de transfert humide constitué du motif de masquage non conducteur sous la forme de points en encre non conductrice ;
une étape d'électroformage consistant à former une couche électrodéposée par électrodépôt d'un métal électroformant sur le film fin conducteur tout en générant et développant un pore fin en une position du motif de masquage non conducteur ; et
une étape de démoulage de coque électroformée poreuse consistant à démouler la couche électrodéposée ayant le pore fin du mandrin époxy.

2. Procédé selon la revendication 1, dans lequel le motif de masquage du film de masquage est transféré sous la forme de points multiples espacés les uns des autres.

3. Procédé selon la revendication 2, dans lequel le motif de masquage est transféré de telle sorte que les points sont espacés les uns des autres, et une densité de points définie par un nombre de points par aire unitaire est entièrement uniforme ou localement non uniforme.

4. Procédé selon la revendication 3, dans lequel un diamètre des points est dans une plage de 0,2 à 0,45 mm et un intervalle entre les points est dans une plage de 3,5 à 10 mm.

5. Procédé selon la revendication 3 ou 4, dans lequel une épaisseur des points est dans une plage de 5 à 25 µm.

6. Procédé selon l'une quelconque des revendications précédentes, dans lequel la surface à motifs du mandrin époxy est sous forme d'un motif de grain pour le cuir.

7. Procédé selon l'une quelconque des revendications précédentes, dans lequel le film fin conducteur est formé par réaction de miroir d'argent, pulvérisation de laque d'argent pâteux, dépôt anélectrolytique ou électroplacage.

8. Procédé selon l'une quelconque des revendications précédentes, dans lequel la couche électrodéposée est constituée de nickel ou de cuivre.

9. Procédé selon l'une quelconque des revendications précédentes, dans lequel dans l'étape d'électroformage, une paroi bloquante ayant une hauteur supérieure à une hauteur maximale du mandrin époxy de 20 à 200 mm environ et de multiples pores formés à l'intérieur sont placés sous forme de boîte au niveau des côtés avant/arrière/gauche/droit et d'un côté supérieur du mandrin époxy, de façon à empêcher le détachement de bulles par une vitesse d'écoulement d'un liquide d'électroformage.

10. Procédé selon l'une quelconque des revendications précédentes, dans lequel, dans l'étape d'électroformage, un courant est, par paliers, augmenté dans une plage de 0,5 à 2,5 A/dm² ou fixé à une valeur prédéterminée dans la plage.

11. Procédé selon l'une quelconque des revendications précédentes, après l'étape de démoulage de coque électroformée poreuse, une étape de retrait de film fin conducteur et de motif de masquage est en outre réalisée.

12. Procédé selon l'une quelconque des revendications précédentes, dans lequel le mandrin époxy est moulé à partir d'une matière coulée en silicone.

13. Procédé selon la revendication 12, dans lequel la matière coulée en silicone est moulée à partir d'un modèle d'enveloppement de cuir ou un modèle en métal léger formant un motif.

14. Procédé selon l'une quelconque des revendications précédentes, dans lequel, après l'étape de démoulage de coque électroformée poreuse, un nettoyage sur une surface externe (ou une surface arrière) de la coque électroformée poreuse, une découpe d'une portion résiduelle, un broyage, un traitement brillant ou mat, ou un jet de sable est réalisé.

15. Procédé selon l'une quelconque des revendications 12 à 14, dans lequel le moulage du mandrin époxy par la matière coulée en silicone et l'électroformage de la coque électroformée poreuse à partir du mandrin époxy sont répétés au moins plusieurs fois afin de former au moins une pluralité de coques électroformées poreuses ayant le même motif et la même forme.

16. Coque électroformée de nickel poreux destinée à la formation de motifs, fabriquée par le procédé selon l'une quelconque des revendications 1 à 15, dans lequel la coque électroformée de nickel poreux a de multiples pores fins, où les pores fins ont un diamètre d'ouverture côté avant dans une plage de 0,02 à 0,35 mm et un diamètre d'ouverture côté arrière dans une plage de 1,20 à 3,50 mm et sont formés de telle sorte que les pores fins sont espacés les uns des autres, et une densité de pore fin définie par un certain nombre de pores fins par aire unitaire est entièrement uniforme ou localement non uniforme.

17. Coque électroformée de nickel poreux selon la revendication 16, dans laquelle au moins 75 % des pores fins ont des diamètres d'ouverture côté avant dans une plage de 0,05 à 0,15 mm.
